# EUROPÄISCHE PATENTANMELDUNG

(11) **EP 2 018 987 A1**
(43) Veröffentlichungstag der Anmeldung: **28.01.2009**
(21) Anmeldenummer: 08012198.1
(22) Anmeldetag: 07.07.2008
(51) Int. Cl.: B60J 7/00

(54) **Schutzvorrichtung mit einer flexiblen Schutzplane**

(30) Priorität: 25.07.2007 DE 102007036652
(71) Anmelder: BOS GmbH & Co. KG, 73760 Ostfildern (DE)
(72) Erfinder: Hintennach, Markus, 73262 Reichenbach (DE); Papp, Zoltan, 9228 Haläszi (HU); Möser, Ephraim, 34582 Borken (DE); Renz, Günther, 71254 Ditzingen (DE)
(74) Vertreter: Patentanwälte Ruff, Wilhelm, Beier, Dauster & Partner

(57) **Zusammenfassung**

Schutzvorrichtung mit einer flexiblen Schutzplane.
eine Schutzvorrichtung mit einer Wickelwelle, auf der die Schutzplane auf- und abwickelbar gehalten ist, mit einer Halterung, in der die Wickelwelle drehbar gelagert ist, wobei die Halterung mit ihren gegenüberliegenden Seitenbereichen längs verlagerbar geführt ist, sowie mit einem vorderen Stirnrand der Schutzplane, der ortsfest gehalten ist, ist bekannt.

Erfindungsgemäß ist wenigstens über die Verlagerungslänge der Halterung den gegenüberliegenden Seitenbereichen jeweils wenigstens ein flexibles Abdeckprofil zugeordnet, das sich ortsfest parallel zu den Führungen erstreckt und derart quer zur Verlagerungsrichtung zur Mitte der Schutzplane hin ragt, dass das Abdeckprofil einen entsprechenden Seitenrand der Schutzplane und den entsprechenden Seitenbereich der Halterung wenigstens teilweise überdeckt.

Einsatz als Sonnenschutz für Personenkraftwagen.

## Beschreibung

Die Erfindung betrifft eine Schutzvorrichtung mit einer flexiblen Schutzplane, mit einer Wickelwelle, auf der die Schutzplane auf- und abwickelbar gehalten ist, mit einer Halterung, in der die Wickelwelle drehbar gelagert ist, wobei die Halterung mit ihren gegenüberliegenden Seitenbereichen in ortsfesten Führungen in Auf- oder Abwickelrichtung der Schutzplane längs verlagerbar geführt ist, sowie mit einem in Abwickelrichtung vorderen Stirnrand der Schutzplane, der in zumindest teilweise abgewickeltem Zustand der Schutzplane ortsfest gehalten ist.

Eine derartige Schutzvorrichtung ist als Sonnenschutzrollo allgemein bekannt. Die Schutzvorrichtung weist eine flexible Schutzplane auf, die mit einem Stirnende auf einer Wickelwelle gehalten ist, die in einem Gehäuse drehbar gelagert ist. Das andere, freie Ende der Schutzplane ist ortsfest fixiert. Das als Halterung für die Wickelwelle dienende Gehäuse ist mit seinen gegenüberliegenden Seitenbereichen in Führungsschienen längs verschiebbar geführt. Bei einer Verschiebung des Gehäuses wird zwangsläufig die an ihrem einen Stirnende ortsfest gehaltene Schutzplane von der Wickelwelle ab- oder auf diese aufgewickelt. Hierzu ist der Wickelwelle eine Rückholfeder zugeordnet, die die Wickelwelle in Aufwickelrichtung mit einem Drehmoment belastet. Zwischen gegenüberliegenden Seitenrändern der Schutzplane und den Führungsschienen, die das Gehäuse führen, verbleibt ein Spalt, für den die Schutzvorrichtung keinen Schutz gegen Sonnenlicht bietet.

Aufgabe der Erfindung ist es, eine Schutzvorrichtung der eingangs genannten Art zu schaffen, die eine verbesserte Schutzwirkung erzielt.

Diese Aufgabe wird dadurch gelöst, dass wenigstens über die Verlagerungslänge der Halterung den gegenüberliegenden Seitenbereichen jeweils wenigstens ein flexibles Abdeckprofil zugeordnet ist, das sich ortsfest parallel zu den Führungen erstreckt und derart quer zur Verlagerungsrichtung zur Mitte der Schutzplane hin ragt, dass das Abdeckprofil einen entsprechenden Seitenrand der Schutzplane und den entsprechenden Seitenbereich der Halterung wenigstens teilweise überdeckt. Die Flexibilität des Abdeckprofils ermöglicht die Anpassung und das zeitweise Ausweichen des Abdeckprofils im Bereich der jeweiligen momentanen Position des Seitenbereichs der Halterung, so dass auch während eines Verlagerungsvorgangs der Halterung die entsprechende Überdeckung erhalten bleibt. Die erfindungsgemäße Lösung eignet sich in besonders vorteilhafter Weise für den Einsatz der Schutzvorrichtung in Kraftfahrzeugen und dort insbesondere als Sonnenschutz oder Lichtschutz für Fahrzeugscheiben oder Glasdächer wie auch als Laderaumschutzvorrichtung, um entweder einen Laderaum etwa horizontal zu überdecken, oder, um eine etwa vertikale Abtrennung eines Laderaums von einem Fahrgastraum zu ermöglichen. Jedes Abdeckprofil kann ein-oder mehrteilig ausgeführt sein. Für die erfindungsgemäße Funktion ist es ausreichend, wenn das jeweilige Abdeckprofil dem entsprechenden Seitenbereich der Halterung und dem jeweiligen Seitenrand der Schutzplane im Bereich einer Außenseite oder einen Innenseite bzw. einer Oberseite oder einer Unterseite zugeordnet ist. Es ist aber auch möglich, das Abdeckprofil so auszuführen, dass eine Überdeckung von beiden Seiten her, d.h. sowohl von der Außenseite als auch von der Innenseite bzw. sowohl von der Oberseite als auch von der Unterseite her erfolgt. Die Halterung mit ihren Seitenbereichen kann als geschlossenes Gehäuse, insbesondere als Kassettengehäuse, oder als offene Halterung mit vorzugsweise becherartigen formstabilen Seitenbereichen und einer starren Querverbindung zwischen den Seitenbereichen ausgeführt sein.

In Ausgestaltung der Erfindung sind dem vorderen Stirnrand der Schutzplane und/oder den Seitenrändern der Schutzplane Klemmmittel zum ortsfesten Fixieren der Schutzplane zugeordnet, die für eine zumindest zeitweise Freigabe des Stirnrandes oder der Seitenränder lösbar gestaltet sind. Die Klemmmittel können zum einen dazu dienen, den vorderen Stirnrand der Schutzplane während eines Verlagerungsvorgangs der Halterung und damit während eines Auf- oder Abwickelvorgangs der Schutzplane zu fixieren. Ergänzend oder alternativ dienen die Klemmmittel dazu, die Schutzplane in teilweise oder vollständig ausgezogenem Zustand straff zu halten, indem sie die entsprechenden Seitenränder der Schutzplane kraftschlüssig fixieren.

In weiterer Ausgestaltung der Erfindung sind die Klemmmittel dem Abdeckprofil räumlich zugeordnet. Die Klemmfunktion und die Abdeckfunktion können in einem gemeinsamen Profil integriert sein.

In weiterer Ausgestaltung der Erfindung ist das wenigstens eine flexible Abdeckprofil in einem sich längs jeweils einer ortsfesten Führung erstreckenden Doppellippenprofil integriert, dessen beide Lippenschenkel den Seitenbereich der Halterung und den zugeordneten Seitenrand der Schutzplane ober- und unterseitig übergreifen, wobei beide Lippenschenkel elastisch nachgiebig ausgeführt sind. Die Formulierung "ober-und unterseitig" kann - wie zuvor bereits ausgeführt - auch durch außen- und innenseitig ersetzt werden, je nachdem, ob die Schutzvorrichtung im Bereich einer Begrenzung eines Fahrzeuginnenraumes wie einer Fahrzeugscheibe oder einem Glasdach angeordnet ist, oder im Wesentlichen zentral im Fahrzeuginnenraum, wie es bei einer Laderaumabdeckung oder einer Laderaumabtrennung der Fall ist. In gleicher Weise kann auch der Begriff "vorder- und rückseitig" verwendet werden, falls die Anordnung innerhalb des Fahrzeuginnenraums durch eine derartige Formulierung ein einfacheres Verständnis für den Fachmann gewährt.

Die elastische Nachgiebigkeit der Lippenschenkel ermöglicht die Anpassung an eine entsprechende Verlagerung der Halterung, indem die Lippenschenkel sich auf Höhe der momentanen Position des entsprechenden Seitenbereichs der Halterung elastisch aufspreizen und sich nach dem Weiterbewegen der Halterung in die eine oder die andere Richtung wieder entsprechend schließen.

Vorzugsweise ist das Doppellippenprofil als Elastomer-Hohlprofil ausgeführt, das neben den beiden Lippenschenkeln mit einer einstückig angeformten Befestigungsprofilierung versehen ist, die ortsfest gehalten ist. Das Doppellippenprofil ist vorzugsweise einteilig ausgeführt. Wenigstens im Bereich der Lippenschenkel ist das Hohlprofil offen ausgeführt, so dass die Lippenschenkel nicht form- oder stoffschlüssig miteinander verbunden sind. Die Befestigungsprofilierung ermöglicht die ortsfeste Fixierung des Doppellippenprofils. Bei einer bevorzugten Ausführungsform ist die Befestigungsprofilierung in einer Nut eines zur Führung für die Längsverlagerung der Halterung dienenden Führungsschienenprofils gehalten, das fahrzeugfest und damit ortsfest befestigt ist. Die Einstückigkeit des Doppellippenprofils ermöglicht eine einfache und kostengünstige Herstellung. Die Verwendung eines Elastomermaterials gewährleistet die notwendige Flexibilität wie auch die gewünschte elastische Rückstellung der Lippenschenkel.

In weiterer Ausgestaltung der Erfindung verlaufen die beiden Lippenschenkel des Doppellippenprofils parallel zu der Führung für den zugeordneten Seitenbereich der Halterung und sind derart elastisch flexibel gestaltet, dass sie um einen Gehäuseabschnitt des Seitenbereichs der Halterung herum aufspreizbar sind und sich an den Gehäuseabschnitt, wenigstens mit linienförmiger Berührung anschmiegen. Die Lippenschenkel öffnen sich somit jeweils in dem Bereich, in dem sich der entsprechende Seitenbereich der Halterung jeweils befindet. Statt einer linienförmigen Berührung ist auch eine flächenförmige Berührung von der Formulierung "wenigstens mit linienförmiger Berührung" umfasst. Wesentlich ist die Abdeckfunktion, ohne dass die Anschmiegung einen großen Reibwiderstand bewirkt, der die Leichtgängigkeit der Verlagerung der Halterung behindert.

In weiterer Ausgestaltung der Erfindung sind die Lippenschenkel in unbelasteter Ruhestellung aneinandergedrückt und üben bei dazwischenliegendem Seitenrand der Schutzplane einen derartigen Kraftschluss auf den Seitenrand aus, dass auf den Seitenrand eine Klemmwirkung und insbesondere eine Rückhaltefunktion gegen eine Bewegung quer zur Auszugrichtung nach innen ausgeübt wird. Da auf beiden Seiten der Halterung und damit auch auf beiden Seiten der Schutzplane jeweils ein Doppellippenprofil vorgesehen ist, werden beide Seitenränder der Schutzplane geklemmt, so dass ein Durchhängen oder ein Faltenwurf der Schutzplane in ausgezogenem Zustand verhindert wird. Vorteilhaft kann die Schutzplane in Querrichtung schrumpfen, insbesondere bei größeren Temperaturschwankungen, ohne dass die Schutzplane beschädigt wird, da sie seitlich nicht formschlüssig, sondern lediglich kraftschlüssig gehalten ist. Diese Klemmkraft der Lippenschenkel ist so begrenzt, dass die Seitenränder der Schutzplane in Querrichtung bei einem entsprechenden Schrumpfvorgang gleiten können. Die Klemmung der Seitenränder der Schutzplane bewirkt, dass die Schutzplane eine Rückhaltefunktion für in die Schutzplane eintauchende Gegenstände bilden könnte, insbesondere falls die Schutzplane als etwa vertikal aufspannbares Trenngebilde zwischen Laderaum und Fahrgastraum eingesetzt wird. Die Lippenschenkel bilden somit Klemmmittel im Sinne der Erfindung, wobei die Klemmfunktion die Seitenränder sowohl in Längsrichtung als auch in Querrichtung sichert.

In weiterer Ausgestaltung der Erfindung umfasst die Halterung für die Wickelwelle ein Gehäuse, in das die Gehäuseabschnitte an den Seitenbereichen integriert sind, und das im Querschnitt gesehen zu beiden Seiten hin keilartig abgeflacht ist. Die abgeflachten Bereiche des Gehäuses erzielen eine Keilwirkung auf die Lippenschenkel des Doppellippenprofils, wobei die eine Abflachung für die Keilwirkung in der einen Längsverlagerungsrichtung und die andere Abflachung für die Keilwirkung in der entgegengesetzten Längsverlagerungsrichtung verantwortlich ist.

Weitere Vorteile und Merkmale der Erfindung ergeben sich aus den Ansprüchen sowie aus der nachfolgenden Beschreibung bevorzugter Ausführungsformen der Erfindung, die anhand der Zeichnung dargestellt sind.
- Fig. 1: zeigt schematisch eine Ausführungsform einer erfindungsge- mäßen Schutzvorrichtung in einem Glasdachbereich eines Kraftfahrzeugs,
- Fig. 2: schematisch in einer Schnittdarstellung einen Teil der Schutz- vorrichtung nach Fig. 1,
- Fig. 3: ein Gehäuse für eine Wickelwelle einer Schutzvorrichtung ähn- lich den Fig. 1 und 2,
- Fig. 4: ein weiteres Gehäuse einer Schutzvorrichtung ähnlich Fig. 3,
- Fig. 5: schematisch einen Teilbereich einer weiteren Ausführungs- form einer erfindungsgemäßen Schutzvorrichtung im Bereich der Klemmung der Seitenränder einer Schutzplane,
- Fig. 6: die Schutzvorrichtung nach Fig. 5 im Bereich eines Gehäuses zur Aufnahme einer Wickelwelle für die in Fig. 5 gezeigte Schutzplane,
- Fig. 7: eine weitere Ausführungsform einer erfindungsgemäßen Schutzvorrichtung ähnlich Fig. 5 und 6 und
- Fig. 8: ein Gehäuse für eine weitere Ausführungsform einer erfin- dungsgemäßen Schutzvorrichtung ähnlich Fig. 3.

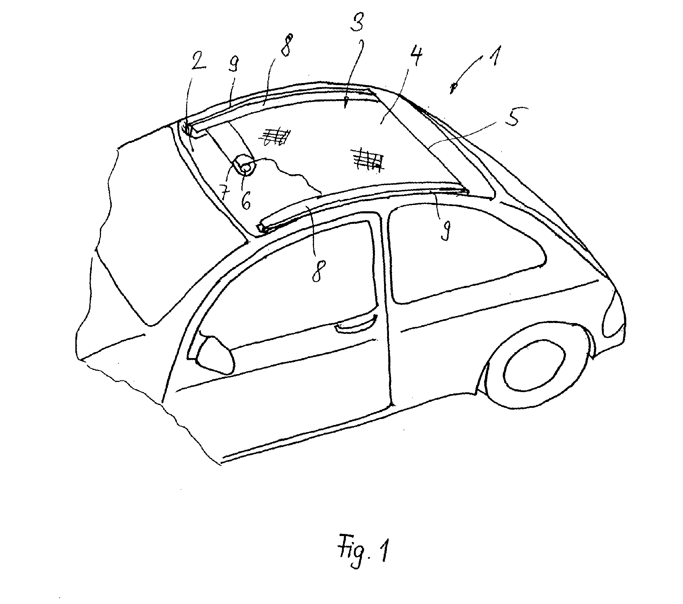

Ein Kraftfahrzeug in Form eines Personenkraftwagens 1 nach Fig. 1 weist in einem Dachbereich einen Dachausschnitt auf, der durch ein Glasdach 2 geschlossen ist. Um trotz des Glasdaches 2 für Fahrzeuginsassen einen Sonnenschutz zu ermöglichen, ist eine Schutzvorrichtung 3 vorgesehen, die im Fahrzeuginneren etwa parallel unterhalb des Glasdachs 2 angeordnet ist.

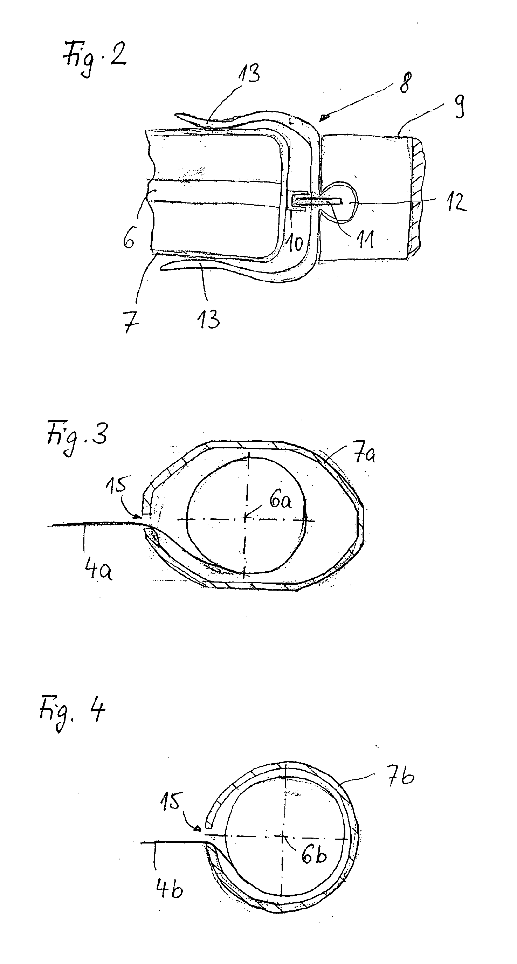

Wie anhand der Fig. 2 schematisch dargestellt ist, weist die Schutzvorrichtung 3 im Bereich von gegenüberliegenden seitlichen Dachrahmen einer Karosserietragstruktur des Kraftfahrzeugs 1 zwei Führungsprofile 9 auf, die an den seitlichen Dachrahmen befestigt und damit relativ zum Kraftfahrzeug 1 ortsfest angeordnet sind. Die Führungsprofile 9 erstrecken sich zumindest im Wesentlichen über die Länge des Glasdaches 2 in Fahrzeuglängsrichtung, wobei die gegenüberliegenden Führungsprofile 9 parallel zueinander ausgerichtet sind. Zwischen den Führungsprofilen 9 erstreckt sich in Fahrzeugquerrichtung und damit quer zu der Längserstreckung der Führungsprofile 9 ein Kassettengehäuse 7, das als Halterung für eine Wickelwelle 6 dient, die in dem Kassettengehäuse 7 drehbar gelagert ist. Auf der Wickelwelle 6 ist ein flexibles Flächengebilde in Form einer Schutzplane auf- und abwickelbar gehalten. Die Länge der Schutzplane - in Fahrzeuglängsrichtung gesehen - entspricht zumindest weitgehend der Länge des abzudeckenden Glasdachbereichs. Die Breite der Schutzplane 4 ist etwas geringer als der Abstand der Führungsprofile 9 zueinander. Ein Stirnendbereich der Schutzplane 4 ist in grundsätzlich bekannter Weise an der Wickelwelle 6 befestigt. Der in Abwickelrichtung vordere, und damit dem erstgenannten Stirnendbereich entgegengerichtete Stirnendbereich 5 ist am freien Stirnende der Schutzplane 4 vorgesehen. Er kann mit einer formstabilen Profilleiste versehen sein, die sich über die gesamte Breite der Schutzplane 4 erstreckt und ortsfest an den Endbereichen der Führungsprofile 9 gehalten ist. Bei der in Fig. 1 gezeigten Ausführungsform bildet der Stirnendbereich 5 somit das heckseitige Ende der Schutzvorrichtung 3.

Beim dargestellten Ausführungsbeispiel ist der Stirnendbereich 5, wie anhand der Fig. 1 erkennbar ist, nicht mit einer zusätzlichen, formstabilen Profilleiste versehen.

Das Kassettengehäuse 7 ist mittels einer Führungsschienenanordnung 10, 11 (Fig. 2) längs der Führungsprofile 9 verschiebbar angeordnet. Die Längsverschiebung des Kassettengehäuses 7 erfolgt beim dargestellten Ausführungsbeispiel von Hand durch eine entsprechende Bedienperson vom Fahrzeuginneren aus. Da der Stirnendbereich 5 der Schutzplane 4 und weitere Flächenabschnitte der Schutzplane 4 - wie nachfolgend noch ausgeführt werden wird - ortsfest zwischen den Führungsprofilen 9 fixiert sind, wird die Schutzplane 4 bei einer Verschiebung des Kassettengehäuses 7 in Fahrzeuglängsrichtung nach vorne zwangsläufig von der Wickelwelle 6 abgewickelt und demzufolge die Schutzplane 4 aus dem Kassettengehäuse 7 ausgezogen. Hierzu ist im Kassettengehäuse 7 ein entsprechender Austrittsschlitz 15 vorgesehen (Fig. 3, 4, 7, 8). Die Wickelwelle 6 ist zudem - in nicht näher dargestellter Weise - mit einer Rückholfederanordnung versehen, die die Wickelwelle 6 in Aufwickelrichtung mit einem begrenzten Drehmoment beaufschlagt. Die Rückholfederanordnung ist mit einer relativ geringen Rückholkraft ausgelegt, um nicht entsprechende Selbsthemmungsfunktionen des Kassettengehäuses 7 oder der ausgezogenen Schutzplane 4 zu überwinden und so ein unbeabsichtigtes Verschieben des Kassettengehäuses 7 oder ein unbeabsichtigtes Aufwickeln der Schutzplane 4 zu bewirken.

Bei der Ausführungsform nach Fig. 2 wird die Längsverlagerung des Kassettengehäuses 7 an den gegenüberliegenden Seitenbereichen des Kassettengehäuses 7 durch jeweils eine Führung erreicht, die durch einen etwa horizontal und radial nach innen ragenden Führungssteg 11 einerseits und einen am Kassettengehäuse 7 stirnseitig angeordneten Gleitschlitten 10 andererseits gebildet ist. Der Führungssteg 11 ist etwa auf halber Höhe des Führungsprofils in einem Befestigungsprofilabschnitt 12 eingebettet, der wiederum Teil eines nachfolgend näher beschriebenen Doppellippenprofils 8 ist. Der Führungssteg 11 erstreckt sich über die gesamte Führungslänge des Führungsprofils 9 und ist ortsfest mittels des Befestigungsprofilabschnitts 12 in einer entsprechenden Hohlkehle des Führungsprofils 9 gehalten. Die Hohlkehle jedes Führungsprofils 9 ist zur Fahrzeugmitte hin nach innen offen.

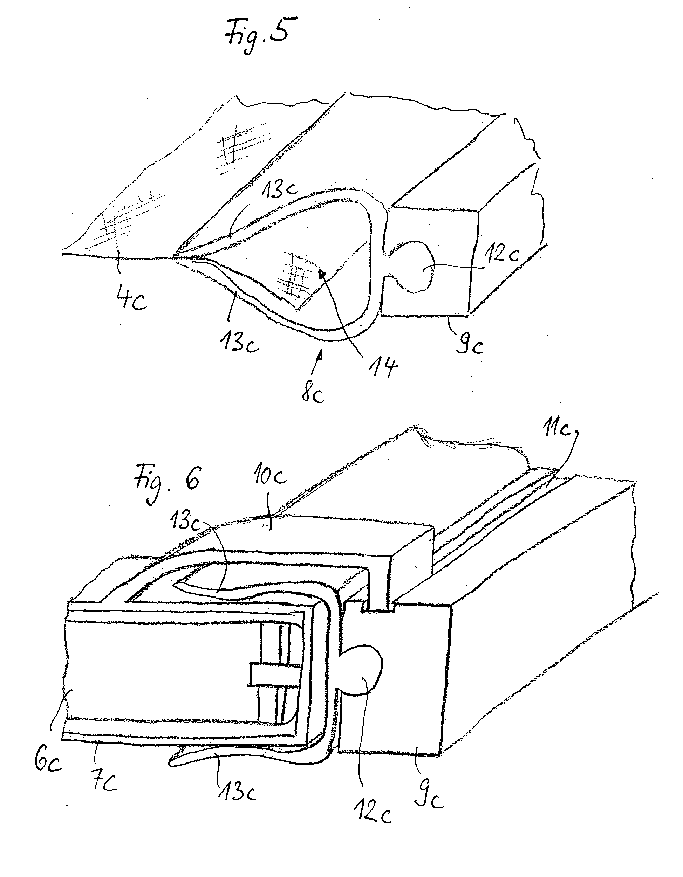

Bei den Ausführungsformen nach den Fig. 5 bis 8 sind für die Führung des jeweiligen Kassettengehäuses 7c bis 7e andere Führungsmittel gewählt worden. Auch dort ist jeweils den gegenüberliegenden Stirnseiten des Kassettengehäuses 7c bis 7e ein Führungsprofil 9c,9d zugeordnet, das ortsfest innerhalb des Kraftfahrzeugs befestigt ist. Die Ausführungsformen entsprechen bezüglich grundsätzlicher Anordnung und Funktion der Ausführungsform nach Fig. 1, so dass zur Vermeidung von Wiederholungen auf die Beschreibung zur Fig. 1 verwiesen wird. Bei den Ausführungsformen nach den Fig. 5 bis 8 erfolgt die Führung des Kassettengehäuses 7c bis 7e nicht über entsprechende Führungsglieder, die etwa auf Höhe einer Drehachse der Wickelwelle angeordnet sind, wie dies bei der Ausführungsform nach Fig. 2 der Fall ist, sondern mit Hilfe von zwei Auslegerarmen 10c bis 10e, die von einer Oberseite des Kassettengehäuses 7c bis 7e nach oben und seitlich nach außen über die zugeordnete Stirnseite des Kassettengehäuses 7c bis 7e hinausragen. Auf den gegenüberliegenden Stirnseiten des Kassettengehäuses 7c bis 7e ist jeweils ein Auslegerarm 10c bis 10e vorgesehen. Jeder Auslegerarm weist einen nach unten ragenden Gleitsteg auf, der in einer Führungsnut 11 c, 11 d im Bereich der Oberseite des Führungsprofils 9c, 9d längsverschiebbar geführt ist. Das Eigengewicht des Kassettengehäuses 7c bis 7e drückt den jeweiligen Gleitsteg des Auslegerarmes 10c bis 10e in die Führungsnut 11 d hinein, so dass für das Kassettengehäuse 7c bis 7e eine stabile Gleitlagerung erzielt wird. Die durch den jeweiligen Auslegerarm 10c bis 10e, den zugeordneten Gleitsteg und die korrespondierende Führungsnut 11 c bis 11 d bewirkte Führung ist somit radial außerhalb zu dem Kassettengehäuse 7c bis 7e angeordnet, so dass die gegenüberliegenden Führungen für das Kassettengehäuse 7c bis 7e einen Abstand zueinander aufweisen, der größer ist als die in Fahrzeugquerrichtung gesehene Längserstreckung des jeweiligen Kassettengehäuses 7c bis 7e.

Bei anderen Ausführungsformen der erfindungsgemäßen Lösung sind anstelle von Gleitführungen Roll- oder Wälzlagerführungen vorgesehen. Auch die Anordnung und Gestaltung entsprechender Führungen als Gleit-, Roll- oder Wälzführungen kann je nach Einsatzzweck in unterschiedlicher Art und Weise gestaltet sein.

Um bei den beschriebenen Ausführungsformen einen verbleibenden Lichtspalt zwischen den Seitenrändern 14 der Schutzplane 4 bis 4d und den entsprechenden Führungsprofilen 9 bis 9d zu verdecken, und, um die Schutzplane 4 bis 4d in ihrem zumindest teilweise abgewickelten und ausgezogenen Funktionszustand fixieren und/oder straffen zu können, ist jedem Seitenbereich des Kassettengehäuses 7 bis 7e jeweils ein Doppellippenprofil 8 bis 8d zugeordnet, das ortsfest an dem jeweiligen Führungsprofil 9 bis 9d gehalten ist. Das Doppellippenprofil 8 bis 8d ist als offenes Elastomerhohlprofil, vorzugsweise als Gummiprofil, ausgeführt, und besitzt im Profil eine herz- oder pikartige Kontur. Unter der pikartigen Kontur ist eine knospenartige Kontur mit einem rückseitig an die Knospe anschließenden Fortsatz zu verstehen, wie dies das Pik-Zeichen bei Kartenspielen hat. Das Doppellippenprofil 8 bis 8d ist mit einem einstückig angeformten Befestigungsprofilabschnitt 12 bis 12d versehen, der formschlüssig in einer entsprechenden Hohlkehle oder Hohlnut des Führungsprofils 9 bis 9d gehalten ist. Vorzugsweise ist der Befestigungsprofilabschnitt 12 bis 12d von einer Stirnseite her längs in die Hohlkehle oder Hohlnut des Führungsprofils 9 bis 9d eingezogen. Das Doppellippenprofil 8 bis 8d ist somit quer zur Auf- oder Abwickelrichtung der Schutzplane 4 bis 4d zur Fahrzeugmitte hin nach innen gerichtet. Das Doppellippenprofil 8 bis 8d weist zwei Lippenschenkel 13 bis 13d auf, die den zugeordneten Seitenrand 14 der Schutzplane 4 bis 4d gemäß den dargestellten Ausführungsformen beidseitig überlappen. Die beiden Lippenschenkel sind - auf eine horizontale Mittelebene bezogen, in der etwa die Schutzplane 4 bis 4d aufgespannt ist - im Profil spiegelsymmetrisch zueinander ausgeführt und jeweils im Querschnitt konvex gewölbt. Dabei liegen sie mit ihren freien Stirnrandbereichen in unbelasteter Ruhestellung aneinander an. Die beiden Doppellippen 13 bis 13d sind derart gekrümmt gestaltet, dass sie im Ruhezustand unter Vorspannung gegeneinander gepresst sind. Sobald daher ein entsprechender Seitenrand 14 der Schutzplane 4 bis 4d zwischen den Lippenschenkeln 13 bis 13d der beiden, einander gegenüberliegenden Doppellippenprofile 8 bis 8d angeordnet ist, wird der entsprechende Seitenrand der Schutzplane 4 bis 4d durch die Vorspannung der Lippenschenkel 13 bis 13d geklemmt. Darüber hinaus sind die Lippenschenkel 13 bis 13d des jeweiligen Doppellippenprofils 8 bis 8d soweit aufspreizbar, dass ein entsprechender Seitenbereich des jeweiligen Kassettengehäuses 7 bis 7d zwischen die Lippenschenkel 13 bis 13d hineinragen kann, wie anhand der Fig. 2, 6 und 7 erkennbar ist. Vorzugsweise ist der Abstand der Lippenschenkel 13 bis 13d in unmittelbarer Nähe zum Führungsprofil 9 bis 9d und damit zum entsprechenden Befestigungsprofilabschnitt 12 bis 12d so groß bemessen, dass der entsprechende Seitenbereich des Kassettengehäuses 7 bis 7d mit Spiel zwischen den gegenüberliegenden Innenwandungen der Lippenschenkel 13 bis 13d positioniert ist. Die Lippenschenkel 13 bis 13d berühren die Oberfläche des Kassettengehäuses 7 bis 7d somit lediglich in einem relativ schmalen Bereich, wie anhand der Fig. 2 und 6 erkennbar ist. Die schmale, vorzugsweise nahezu linienförmige Berührung dient dazu, Haft- oder Gleitreibungskräfte zwischen Kassettengehäuse und Innenwandungen der Lippenschenkel zu reduzieren. Die Aufweitung oder Aufspreizung der Lippenschenkel 13 bis 13d auf Höhe der Seitenbereiche des Kassettengehäuses 7 bis 7d erfolgt ausschließlich im elastischen Bereich, so dass nach einer Längsverlagerung des Kassettengehäuses 7 bis 7d zu einem anderen Führungsabschnitt die Lippenschenkel 13 bis 13d sich wieder unter Umgreifung und Klemmung der Seitenränder 14 der Schutzplane 4 bis 4d schließen.

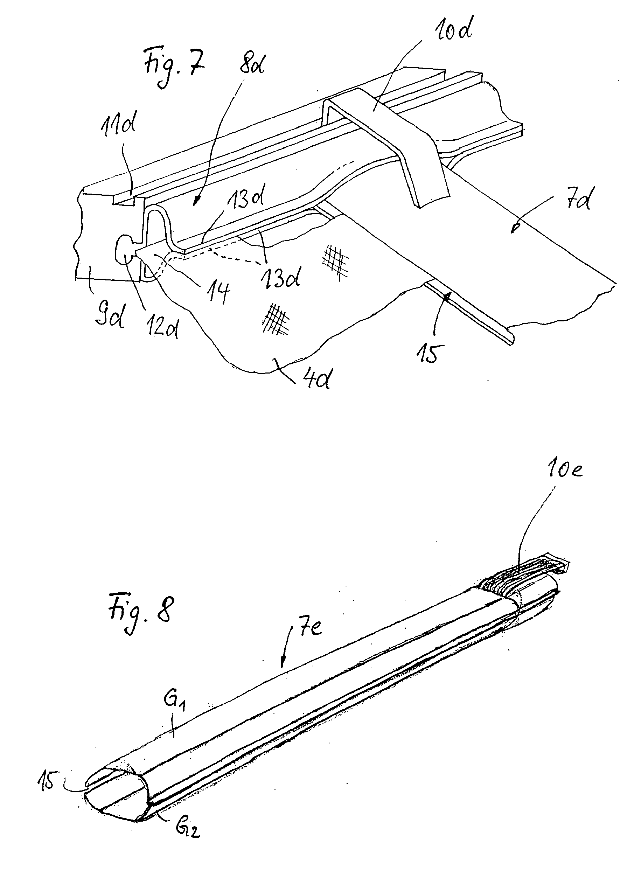

Um ein schonendes Aufspreizen der Lippenschenkel 13 bis 13d im Bereich des Kassettengehäuses 7 bis 7d zu ermöglichen, ist das Kassettengehäuse 7 bis 7d im Bereich seiner Außenkontur in beiden Verlagerungsrichtungen keilartig abgeflacht, wie anhand der Fig. 7 gut erkennbar ist. Die langsame Aufweitung ist zum einen schonend für das Elastomermaterial der Lippenschenkel 13 bis 13d. Zum anderen wird durch die keilförmige Gestaltung des Kassettengehäuses 7 bis 7d in beiden Richtungen der Längserstreckung der Schutzvorrichtung ein Auseinanderdrücken der Lippenschenkel 13 bis 13d erst unmittelbar vor dem Kassettengehäuse 7 bis 7d erzielt, so dass die Seitenränder 14 der Schutzplane 4 bis 4d bei einer entsprechenden Längsverlagerung des Kassettengehäuses so lange wie möglich eingeklemmt und damit gestrafft und fixiert bleiben.

Das Kassettengehäuse 7e nach Fig. 8 ist ebenfalls zu beiden Seiten hin keilartig abgeflacht, so dass sich im Querschnitt eine muschelartige Kontur ergibt. Bei dieser Ausführungsform besteht das Kassettengehäuse 7e aus zwei Gehäuseschalen G₁, G₂, die etwa spiegelsymmetrisch zueinander gestaltet sind und im Bereich eines nicht näher bezeichneten Falzes sowie vorzugsweise mit Hilfe von Seitenteilen an gegenüberliegenden Stirnseiten des Gehäuses miteinander verbunden sind. Zwischen den beiden Gehäuseschalen G₁, G₂ ist der Austrittsschlitz 15 vorgesehen.

Ein ähnliches Kassettengehäuse ist anhand der Fig. 3 dargestellt, wobei das Kassettengehäuse 7a nach Fig. 3 als einteiliges Hohlprofil ausgeführt ist.

Das Kassettengehäuse 7b nach Fig. 4 weist ein im Wesentlichen hohlzylindrisches Profil auf und ist ebenfalls einstückig ausgeführt.

Die Funktionsweise aller Ausführungsformen, wie sie anhand der Zeichnungen dargestellt sind und zuvor beschrieben worden sind, ist wie folgt: Bei einer Erstinbetriebnahme der Schutzvorrichtung 3 wird der freie Stirnendbereich der Schutzplane 4 aus dem Kassettengehäuse herausgezogen und ortsfest zwischen den Führungen fixiert. Diese Fixierung kann entweder in einfacher Weise dadurch erfolgen, dass der Stirnendbereich auf Höhe seiner gegenüberliegenden Seitenränder zwischen den Lippenschenkeln der Doppellippenprofile eingeklemmt wird. Alternativ kann der Stirnendbereich der Schutzplane mit einer formstabilen Profilleiste oder einem ähnlichen Halteelement versehen werden, das an korrespondierenden Funktionsteilen der gegenüberliegenden Führungen der Schutzvorrichtung ortsfest verankert oder in anderer Art und Weise fixiert wird. Da die Breite der jeweiligen Schutzplane bei allen Ausführungsformen größer ist als der Abstand der nach innen zur Fahrzeugmitte gerichteten Vorderkante der gegenüberliegenden Doppellippenprofile zueinander, wird die Schutzplane mit ihren Seitenrändern 14 zwangsläufig beim Ausziehen aus dem Kassettengehäuse zwischen die Lippenschenkel der Doppellippenprofile eingezogen und durch deren elastische Vorspannung geklemmt. Unabhängig davon, wie weit das Kassettengehäuse somit in den Führungen verschoben wird, ist der jeweils momentan ausgezogene Flächenbereich der Schutzplane jeweils nahezu vollständig zwischen den Doppellippenprofilen eingeklemmt und wird demzufolge straffgehalten.

Bei besonders bevorzugten Ausführungsformen der Erfindung sind die Lippenschenkel der Doppellippenprofile nicht nur mit einer Klemmfunktion, wie zuvor beschrieben, ausgeführt, sondern zusätzlich noch mit einer Straffungsfunktion in Querrichtung der Schutzplane und damit quer zur Auf- oder Abwickelrichtung versehen. Hierzu weisen die Lippenschenkel eine elastische Vorspannungskomponente in Querrichtung nach außen und damit von der Fahrzeugmitte bzw. der Mitte der Schutzplane weg auf. Diese Straffungsfunktion kann dadurch erzielt werden, dass jeder Lippenschenkel in - imaginärer - unbelasteter Ruhestellung nicht nur nach oben bzw. nach unten über den jeweils benachbarten Lippenschenkel hinausragen würde, sondern sich auch noch zusätzlich zu dem Befestigungsprofilabschnitt 12 bis 12d hin nach innen zurückziehen würde. Der Lippenschenkel weist somit Biegekraftkomponenten sowohl in Richtung des benachbarten Lippenschenkels als auch in Richtung des rückseitig angeordneten Befestigungsprofilabschnitts hin auf.

## Patentansprüche

1. Schutzvorrichtung mit einer flexiblen Schutzplane, mit einer Wickelwelle, auf der die Schutzplane auf- und abwickelbar gehalten ist, mit einer Halterung, in der die Wickelwelle drehbar gelagert ist, wobei die Halterung mit ihren gegenüberliegenden Seitenbereichen in ortsfesten Führungen in Auf- oder Abwickelrichtung der Schutzplane längs verlagerbar geführt ist, sowie mit einem in Abwickelrichtung vorderen Stirnrand der Schutzplane, der in zumindest teilweise abgewickeltem Zustand der Schutzplane ortsfest gehalten ist, **dadurch gekennzeichnet, dass** wenigstens über die Verlagerungslänge der Halterung (7 bis 7d) den gegenüberliegenden Seitenbereichen jeweils wenigstens ein flexibles Abdeckprofil (8 bis 8d) zugeordnet ist, das sich ortsfest parallel zu den Führungen (9 bis 9d) erstreckt und derart quer zur Verlagerungsrichtung zur Mitte der Schutzplane (4 bis 4d) hin ragt, dass das Abdeckprofil (8 bis 8d) einen entsprechenden Seitenrand (14) der Schutzplane (4 bis 4d) und den entsprechenden Seitenbereich der Halterung (7 bis 7d) wenigstens teilweise überdeckt.

2. Schutzvorrichtung nach dem Oberbegriff des Anspruchs 1 oder nach Anspruch 1, **dadurch gekennzeichnet, dass** dem vorderen Stirnrand (5) der Schutzplane (4 bis 4d) und/oder den Seitenrändern (14) der Schutzplane (4 bis 4d) Klemmmittel (13 bis 13d) zum ortsfesten Fixieren der Schutzplane (4 bis 4d) zugeordnet sind, die für eine zumindest zeitweilige Freigabe des Stirnrandes (5) oder der Seitenränder (14) lösbar gestaltet sind.

3. Schutzvorrichtung nach Anspruch 2, **dadurch gekennzeichnet, dass** die Klemmmittel (13 bis 13d) dem Abdeckprofil (8 bis 8d) räumlich zugeordnet sind.

4. Schutzvorrichtung nach Anspruch 1 oder 2, **dadurch gekennzeichnet, dass** das wenigstens eine flexible Abdeckprofil in einem sich längs jeweils einer ortsfesten Führung (9 bis 9d) erstreckenden Doppellippenprofil (8 bis 8d) integriert ist, dessen beide Lippenschenkel (13 bis 13d) den Seitenbereich der Halterung (7 bis 7e) und den zugeordneten Seitenrand (14) der Schutzplane (4 bis 4d) ober- und unterseitig übergreifen, wobei beide Lippenschenkel (13 bis 13d) elastisch nachgiebig ausgeführt sind.

5. Schutzvorrichtung nach Anspruch 4, **dadurch gekennzeichnet, dass** das Doppellippenprofil (8 bis 8d) als Elastomer-Hohlprofil ausgeführt ist, das neben den beiden Lippenschenkeln (13 bis 13d) mit einer einstückig angeformten Befestigungsprofilierung (12 bis 12d) versehen ist, die ortsfest gehalten ist.

6. Schutzvorrichtung nach Anspruch 4 oder 5, **dadurch gekennzeichnet, dass** die beiden Lippenschenkel (13 bis 13d) des Doppellippenprofils (8 bis 8d) parallel zu der Führung (9 bis 9d) für den zugeordneten Seitenbereich der Halterung (7 bis 7e) verlaufen und derart elastisch flexibel gestaltet sind, dass sie um einen Gehäuseabschnitt des Seitenbereichs der Halterung (7 bis 7e) herum aufspreizbar sind und sich an den Gehäuseabschnitt wenigstens mit linienförmiger Berührung anschmiegen.

7. Schutzvorrichtung nach Anspruch 4, **dadurch gekennzeichnet, dass** die Lippenschenkel (13 bis 13d) in unbelasteter Ruhestellung aneinandergedrückt sind und bei dazwischenliegendem Seitenrand (14) der Schutzplane (4 bis 4d) einen derartigen Kraftschluss auf den Seitenrand (14) ausüben, dass auf den Seitenrand (14) eine Klemmwirkung und insbesondere eine Rückhaltefunktion gegen eine Bewegung quer zur Auszugrichtung nach innen ausgeübt wird.

8. Schutzvorrichtung nach wenigstens einem der vorhergehenden Ansprüche, **dadurch gekennzeichnet, dass** die Halterung für die Wickelwelle ein Gehäuse (7 bis 7e) umfasst, in das die Gehäuseabschnitte an den Seitenbereichen integriert sind, und das im Querschnitt gesehen zu beiden Seiten hin keilartig abgeflacht ist.

9. Schutzvorrichtung nach Anspruch 8, **dadurch gekennzeichnet, dass** das Gehäuse (7 bis 7e) - im Querschnitt gesehen - sowohl im Bereich seiner Oberseite als auch im Bereich seiner Unterseite konvex gewölbt gestaltet ist.

10. Schutzvorrichtung nach Anspruch 9, **dadurch gekennzeichnet, dass** das Gehäuse (7e) - im Querschnitt gesehen - zwei miteinander verbundene Gehäuseprofilschalen umfasst.
